# EUROPEAN PATENT SPECIFICATION

(11) **EP 2 054 321 B1**
(45) Date of publication and mention of the grant of the patent: **30.03.2011**
(21) Application number: 07808530.5
(22) Date of filing: 09.08.2007
(51) Int. Cl.: B65D 85/804

(54) **PAD WITH COVERING FILLED WITH PRODUCT TO BE EXTRACTED, ASSEMBLY OF A FIRST AND A SECOND PAD; AND METHOD FOR PREPARING A SMALL OR LARGE AMOUNT OF BEVERAGE**
MIT ZU EXTRAHIERENDEM PRODUKT GEFÜLLTER PAD MIT ÜBERZUG, ANORDNUNG AUS EINEM ERSTEN UND EINEM ZWEITEN PAD UND VERFAHREN ZUR ZUBEREITUNG EINER KLEINEN ODER GROSSEN GETRÄNKEMENGE
CAPSULE AVEC REVÊTEMENT REMPLIE DE PRODUIT À EXTRAIRE, ASSEMBLAGE D'UNE PREMIÈRE ET SECONDE CAPSULE ; ET PROCÉDÉ DE PRÉPARATION D'UNE PETITE OU GRANDE QUANTITÉ DE BOISSON

(30) Priority: 10.08.2006 NL 1032292
(43) Date of publication of application: 06.05.2009
(73) Proprietor: Sara Lee/DE N.V., 3532 AA Utrecht (NL)
(72) Inventor: BROUWER, Gustaaf Frans, NL-3862 KC Nijkerk (NL); KOELING, Hendrik Cornelis, NL-3826 BE Amersfoort (NL)
(74) Representative: Hatzmann, Martin
(86) International application number: PCT/NL2007/050397
(87) International publication number: WO 2008/018793

(56) References cited:
- WO-A-03/059778
- US-A1- 2005 158 426

## Description

The invention relates to a pad with a covering filled with product to be extracted and/or to be dissolved, wherein, in use, a fluid such as water is supplied under pressure to the pad, so that the fluid is pressed through the pad for obtaining a beverage which, thereupon, leaves the pad.

Such pads are known per se and the covering of the pad is typically provided with a first sheet and a second sheet. As a rule, these sheets are attached to each other near their circumferential edge. However, these sheets can also be attached to each other via a frame.

The use of such a pad is described in EP 1092377. In use, the pad is then placed in the holder and, together with this holder, placed in a fluid flow path of a beverage preparation apparatus. After this, water is led under pressure through the fluid flow path and supplied to the pad. In the pad, an extract and/or a solution is formed which flows along the fluid flow path from the holder into a cup or mug as a ready beverage. For preparing the beverage with the fine bubble froth layer, the holder is provided with a nozzle for generating a jet of the beverage for obtaining the fine bubble froth layer on the beverage with the aid of the jet. Here, the nozzle of the holder forms a flow restriction which forms a flow resistance to the beverage to be dispensed. The magnitude of the flow resistance and a duration of a time period over which the fluid is supplied to the holder together determine the amount of the beverage that is prepared.

The above-described manner of preparing beverage has the drawback that it is not possible to vary the amount and/or the strength (concentration) of the prepared beverage depending on the pad used. One option for, indeed, varying the amount and/or the strength of the prepared beverage depending on the pad used would be to use a different holder for each pad, which would, however, be an expensive and impractical affair. The above-described manner has the further drawback that it is not possible to select an optimal amount of fluid to be supplied, depending on the specific product, for instance a specific type of coffee.

An object of the invention is to meet at least one of the above-described drawbacks.

To this end, according to the invention a pad is provided according to claim 1.

Further, according to the invention, an assembly is provided with a first and a second pad for preparing a smaller or a larger, such as a normal, amount of beverage, each having a covering filled with product to be extracted and/or to be dissolved while, in use, a fluid such as water is supplied under pressure to the pad so that the fluid is pressed through the pad for obtaining a beverage which, thereupon, leaves the pad, each provided with a spout opening, for generating, with the spout opening, a jet of the beverage that leaves the pad for obtaining the fine bubble froth layer on the beverage with the aid of the jet while, for preparing a smaller amount of beverage, a cross section of the spout opening of the first pad is selected to be smaller than a cross section of a spout opening of the second pad.

Thus, the flow restriction formed by the spout opening is included in the pad. The flow resistance experienced by the fluid as a result of the spout opening is thus determined by the pad. As the flow resistance of the spout opening is varied per pad, it is, therefore possible to determine in advance, per pad, a flow resistance of the spout opening so that, upon use of the respective pad, for a given period of time, and at a given pressure, a predetermined amount of fluid is dispensed by the spout opening. It will be clear that the given pressure may depend on the flow resistance experienced by the fluid as a result of the spout opening. As the cross section of the spout opening of the first pad is selected to be smaller than the cross section of a spout opening of the second pad, the user can select the flow resistance to be utilized simply by selecting the first pad or the second pad. Thus, by simply selecting the first pad or the second pad, the user can determine whether the smaller or the larger amount of beverage is prepared.

Thus, per pad, the amount of beverage to be prepared with the pad can be determined in advance, and, if desired, be geared to the beverage to be prepared. Thus, a magnitude of the flow resistance, caused by the spout opening, for the fluid supplied to the pad can be geared to, for instance, the product to be extracted and/or to be dissolved included in the pad, and/or the beverage to be prepared with the aid of the pad.

W02006/043106 discloses a pod for preparing a beverage, wherein the pod may be provided, at or near an outlet, with an aperture through which the beverage is pressed for forming a jet of the beverage for forming foam of the beverage with it. However, WO 2006/043106 does not relate to a method for preparing a smaller or a larger amount of beverage utilizing a first or second pad according to the invention.

US2002/0078831 discloses a cartridge for preparing a beverage, wherein the cartridge may be provided with an opening for generating a jet of the beverage for forming foam of the beverage therewith. However, US 2002/0078831 does not relate to a method for preparing a smaller or a larger amount of beverage utilizing a first or second pad according to the invention.

EP1440908 discloses a cartridge for preparing a beverage, wherein the cartridge may be provided with an opening for generating internally, in the cartridge, a jet of the beverage for forming foam of the beverage with it. However, EP 1 440 908 does not relate to a method for preparing a smaller or a larger amount of beverage utilizing a first or second pad according to the invention.

US 2005/158426 discloses a pod for preparing a beverage, the pod cooperating with a receiver for receiving the pod. The receiver may be provided with a restriction in order to form a jet for delivering the beverage in a cup. However, US 2005/158426 does not disclose the restriction is part of the pod, and does not relate_to a method for preparing a smaller or a larger amount of beverage utilizing a first or second Pad according to the invention.

Preferably, the covering is provided with a first side and a second side, with the product located between the first side and the second side, and wherein, on the second side, the covering is at least virtually non-transmissive to the fluid and the beverage, while, at the second side of the covering, the pad is provided with the spout opening. Preferably, on the first side, the covering is designed at least partly as a filter which is transmissive to the fluid and the beverage and at least virtually non-transmissive to the product. Thus, it is possible to supply the fluid via the first side to the product included in the covering and discharge it on the second side substantially exclusively via the spout opening of the pad. As a result, the flow resistance the fluid experiences due to the pad will be well defined. As a further result, the product, i.e. the product in a condition to be dissolved and/or to be distracted, is prevented from leaving the covering.

Preferably, on the first side, the covering is formed by a first sheet and, on the second side, is formed by a second sheet, between which the product to be extracted and/or to be dissolved is included, while the spout opening is provided in, on or at the second sheet. This offers the advantage that the pads can be manufactured in a simple manner.

Preferably, the first and/or second pad comprises a fluid communication between the spout opening and a space enclosed by the covering. Thus, the beverage to be prepared in the space enclosed by the covering through extraction and/or dissolution can be dispensed via the spout opening in the form of the jet for obtaining the fine bubble froth layer on the beverage.

In one embodiment, the spout opening comprises a spout element which is provided with an inflow opening and a dispensing opening, wherein the inflow opening is connected via a fluid communication with the space enclosed by the covering, and the dispensing opening is designed for generating a jet of the beverage with the dispensing opening. Thus, it is possible that the spout opening has some enlargement such as, for instance, a nozzle, for providing, for instance, a directed jet of the ready beverage.

Preferably, the first and/or second pad comprises distancing means which form a fluid flow area that extends between the spout opening and the product, wherein the fluid flow area comprises an inflow surface, while, in use, the fluid and/or the beverage flows into the fluid flow area via the flow surface, and flows from the fluid flow area via the spout opening. Thus, the prepared beverage can flow in efficient manner from the space in which the product is included, via the fluid flow area to the spout opening to, there, be dispensed.

Preferably, the inflow surface has a surface which is larger than a surface of the spout opening. Thus, the prepared beverage can leave the space in which the product is included in a very efficient manner via the inflow surface with the large surface and, via the fluid flow area, flow to the spout opening to, there, be dispensed.

In a special embodiment, the inflow surface extends substantially over at least virtually the entire cross section of the covering over which the product extends. Thus, the prepared beverage can leave the space in which the product is included in a highly efficient manner via the inflow surface extending substantially over the entire cross section of the covering over which the product extends, and flow via the fluid flow area to the spout opening to, there, be dispensed.

In one embodiment, the distancing means comprise an open-cell foam, an optionally sintered grain material, a gauze, at least one rib, at least one rod, a third sheet and/or a substantially rigid element. Thus, distancing means that can be manufactured simply and inexpensively are provided for holding the product at a distance from the spout opening.

In one embodiment, the distancing means comprise a third sheet. The third sheet may simply form, at least partly, the inflow surface.

In a special embodiment, the first and/or second pad is provided with frothing means for forming the fine bubble froth layer on the beverage under the influence of the jet exiting from the spout opening. Thus, the pad can be utilized for preparing the beverage with the fine bubble froth layer in a beverage preparation apparatus which, in itself, is not suited or designed for providing the beverage with the fine bubble froth layer.

The invention also relates to a method for preparing a smaller or a larger amount of beverage, comprising providing supplying a fluid, such as water under pressure, to a pad with a covering filled with product to be extracted and/or be dissolved, wherein an amount of fluid to be supplied to the pad is regulated on the basis of a duration of a time period over which the fluid is supplied to the pad, the method comprising providing a first and a second pad, each provided with a spout opening, for generating a jet of the beverage with the spout opening, which jet leaves the pad for obtaining a fine bubble froth layer on the beverage with the aid of the jet, wherein, per pad, a flow resistance of the spout opening is varied, while, for preparing the smaller amount of beverage, a cross section of the spout opening of the first pad is selected to be smaller than a cross section of a spout opening of the second pad.

Preferably, the method comprises supplying the fluid, with the aid of one and the same beverage preparation apparatus, to the first or the second pad.

It is preferred that the method comprises supplying the jet exiting from the spout opening to frothing means for obtaining the fine bubble froth layer. Here, the frothing means can comprise a jet impact element or a roughened surface.

Preferably, the larger amount of beverage involves 90 - 250 ml, such as, for instance, with a normal portion of coffee, and the smaller amount of beverage involves 15 - 90 ml, as with a small portion of coffee. The first pad for preparing the smaller amount of beverage can contain 2 - 5 g of ground coffee.

Preferably, the duration of the time period during which the fluid is supplied to the first or second pad is 20-40 seconds, more preferably approximately 30 seconds.

Preferably, the cross section of the spout opening of the first pad is 0,04- 0,2 mm², more preferably approximately 0,1 mm², and the cross section of the spout opening of the second pad is 0,5 - 2.5 mm², more preferably approximately 0,7 mm².

The invention also relates to an assembly of a first and a second pad, each with a covering filled with product to be extracted and/or to be dissolved, wherein, in use, a fluid such as water is supplied under pressure to the pad, so that the fluid is pressed through the pad for obtaining a beverage which, thereupon, leaves the pad, each provided with a spout opening for generating, with the spout opening, a jet of the beverage which leaves the pad for obtaining the fine bubble froth layer on the beverage with the aid of the jet, while, for preparing a smaller amount of beverage, a cross section of the spout opening of the first pad is selected to be smaller than a cross section of a spout opening of the second pad.

The invention also relates to an assembly provided with such a pad and a holder for holding the pad.

The invention further relates to a beverage preparation apparatus for preparing a beverage by means of extraction and/or dissolution, wherein the beverage preparation apparatus is provided with such an assembly, while the holder is designed for holding the pad, and fluid supply means for supplying the fluid under pressure to the pad.

Presently, the invention will be further elucidated by way of non-limitative example, with reference to the drawing. In the drawing:
Fig. 1a shows a perspective view of a beverage preparation apparatus;
Fig. 1b shows a perspective view of the beverage preparation apparatus of Fig. la with an opened lid;
Fig. 1c shows a perspective view of the beverage preparation apparatus of Fig. 1a, wherein it is shown how a holder can be placed in the apparatus;
Fig. 2 shows a schematic cross section of an assembly of a holder and a pad according to the invention;
Fig. 3 shows a longitudinal cross section of the beverage preparation apparatus of Figs. 1a - 1c; and
Fig. 4a - 4e shows a second to sixth embodiment of a pad according to the invention.

In the drawing, identical reference numerals refer to identical parts.

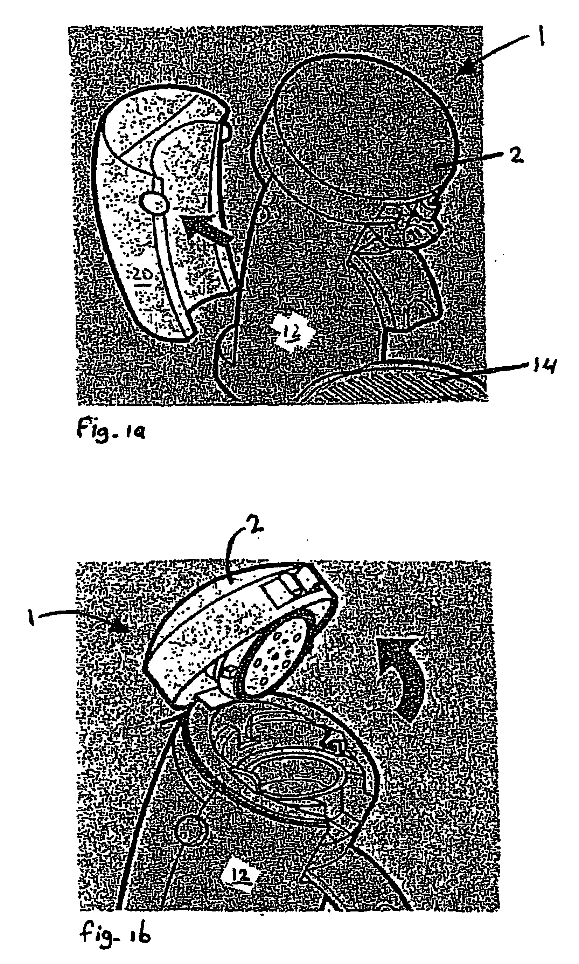

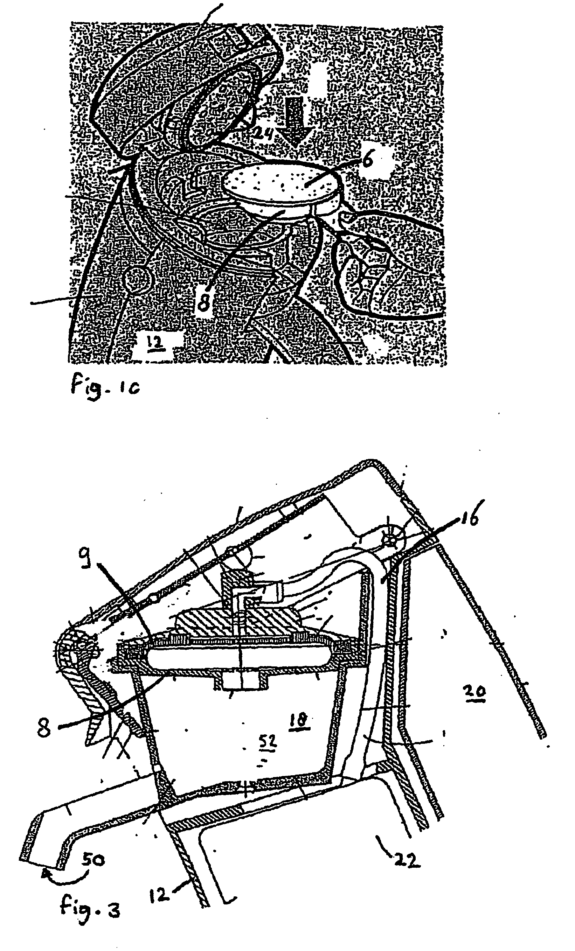

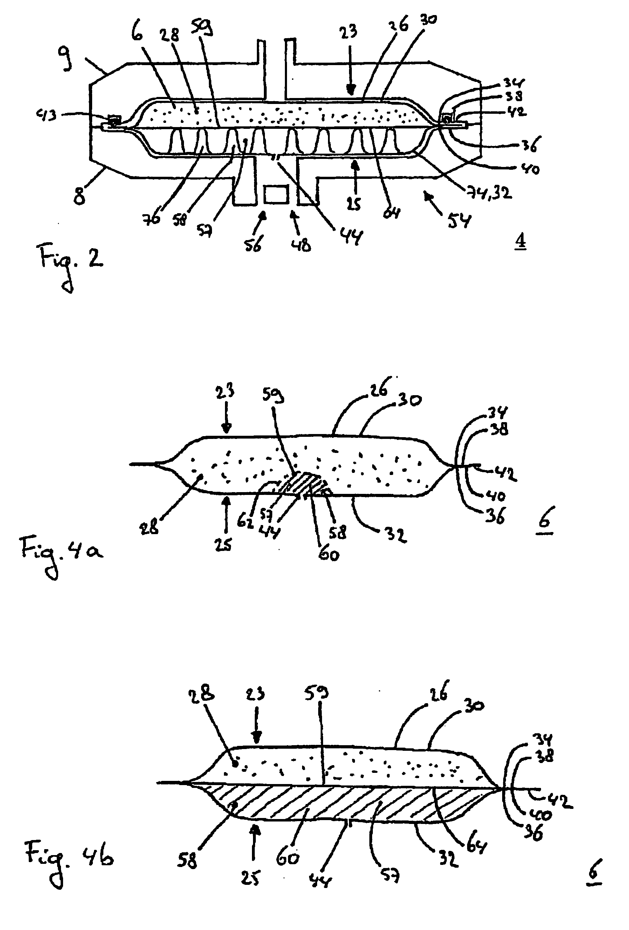

Figs. 1a-1c show a perspective view of a beverage preparation apparatus 1 for preparing a beverage by means of extraction and/or dissolution. Here, Fig. 1a shows the beverage preparation apparatus 1 with a closed lid 2 and Figs. 1 and 1c show the beverage preparation apparatus 1 with an opened lid 2. In Figs. 1a - 1c, more specifically, a coffee machine 1 is involved. The coffee machine 1 shown is suitable for receiving an assembly 4 provided with a pad 6 and a holder 8 (see Fig. 2). The holder 8 is designed for holding the pad 6 and is placed, in use, at least partly downstream of the pad 6. If the lid 2 is closed, the holder 8 is closed by means of a holder lid 9 (see Fig. 3). The coffee machine 1 further comprises a housing 12 and a foot 14 on which foot 14 one or two cups (not shown in the Figures) can be arranged during preparation of the beverage. The housing 12 further comprises fluid supply means 16, in this example a conduit (see Fig. 3) for feeding a fluid, in particular a liquid, in case of the coffee machine 1, water, to the pad 6. The housing 12 further comprises frothing means 52, in this example formed by a buffer reservoir 18, wherein, in use, froth can be formed, a water reservoir 20 and a fluid dispensing unit 22, in this example a hot water dispensing unit, for feeding the water, in this case, hot water, from the water reservoir 20, through the fluid supply means 16 and supply openings 24, under pressure to the pad 6.

Fig. 2 shows an assembly 54 of a holder 8 and a pad 6. For the sake of clarity, in Fig. 1, also, the holder lid 9 is shown. Here, the holder lid 9 does not form part of the holder 8. In Fig. 2, the pad 6 is placed in the holder 8 for use of the pad.

In Fig. 2, a first embodiment of the pad 6 is shown. The pad has a first side 23 and a second side 25. A space enclosed by the covering 26 is filled with product 28 to be extracted and/or to be dissolved, in this example ground coffee beans. The covering 26 is provided with a first sheet 30 and a second sheet 32. It will be clear that in general, a sheet is a substantially flexible element. The first sheet 30 forms the first side 23 of the covering and the second sheet 32 forms the second side 25 of the covering 26. In this example, the first sheet 30 is manufactured from, for instance, filtering material, such as filtering paper. In Fig. 2, the pad 6 is further provided with a third sheet 64. The third sheet can be manufactured from, for instance, filtering material.

In Fig. 2, the product 28 is located between the first and the second side 23, 25 of the covering 26. In particular, the product 28 is located between the first and the second sheet 30, 32. More particularly, the product 28 is located between the first and the third sheet 30, 64.

In this example, the pad 6 is further provided with a substantially rigid dish part 74. The pad 6 is further provided with a spout opening 44 for generating, with the spout opening 44, a jet of the beverage that leaves the pad. In this example, the spout opening 44 of the pad 6 is included in the dish part 74. Here, the dish part 74 is preferably at least virtually non-transmissive to the fluid and the beverage. In Fig. 2, the spout opening 44 is schematically represented. The spout opening 44 can comprise, for instance, a nozzle (for instance a small tube). In this example, the spout opening can also be designed as an opening such as a nozzle, for instance a bore, in the dish part 74.

In Fig. 2, the pad 6 is further provided with distancing means 58 which form a fluid flow area 57 that extends between the spout opening and the product 28, wherein the fluid flow area 57 comprises an inflow surface 59, wherein, in use, the fluid and/or the beverage flows into the fluid flow area via the inflow surface 59, and flows from the fluid flow area 57 via the spout opening 44. In the example of Fig. 2, the inflow surface 59 is formed by the third sheet 64. In Fig. 2, it can also be seen that the inflow surface 59 has a surface which is larger than a surface of the spout opening 44. Thus, the beverage can leave the space in which the product is located via a surface to be flowed through that is larger than when the beverage leaves the space in which the product is located via a surface to be flowed through having the size of the spout opening. As a result, the product 28 will be extracted and/or dissolved in a more efficient manner. Then, the beverage can flow substantially unhindered through the fluid flow area 57 to the spout opening 44, so that the beverage can leave the pad 6 in an efficient manner.

As, in this example, the distancing means 58 comprise the third sheet 64, and are designed for holding the spout opening 44 at a distance from the third sheet, and hence, the product 28, the spout opening is also prevented from becoming clogged with the product, for instance grains of ground coffee. In this example, the distancing means 58 comprise a plurality of rods 76 which, in this example, form an integral part of the dish part 74. The third sheet 64 rests on the tops of the rods 76. Thus, the spout opening 44 is placed at a distance from the third sheet 64 of the covering 26. The dish part 74 and the plurality of rods 76 can be manufactured from, for instance, a (biodegradable) plastic.

In Fig. 2, further, the holder 8 is shown for holding the pad 6. In this example, the holder 8 comprises a supporting part 46 placed, at least in use, downstream of the pad 6 and a fluid passage in the form of opening 48. In Fig. 2, the holder is provided with a bottom with the at least one opening 48. In this example, the second side of the covering rests on the bottom, while the spout opening 44 is located above or in the opening 48 so that, in use, the jet and/or the beverage leaves the holder via the opening of the holder.

The pad 6 and the holder 8 form an assembly that can be placed in the coffee machine 1, as is also shown in Fig. 1c. Naturally, it is also possible to, first, place the holder 8 in the coffee machine 1 and, after this, place the pad in the holder 8. After placing the holder 8 and the pad 6 in the coffee machine 1, the lid 2 can be closed whereupon the coffee machine 1 can be brought to a condition of use.

The beverage preparation apparatus 1 and pad 6 described so far can be used according to the following method for providing a beverage with the fine bubble froth layer.

In this example, the pad 6 is placed in the holder 8 for use of the pad. Then, the beverage preparation apparatus 1 can be switched on for preparing the beverage, while the beverage preparation apparatus 1 in this example will supply water under pressure to the pad 6 for obtaining a beverage. In use, the fluid is supplied to the pad 6 along a fluid flow path defined by the fluid supply means 16. This supply takes place under a pressure such that the spout opening 44 can be flowed through. A pressure between 1 and 7 bar is usually suitable. More particularly, a pressure between 1 and 2 bar is used.

The fluid is supplied by the fluid dispensing unit 22, from the reservoir 20, via the fluid supply means 16 and supply openings 24, via the first side 23 of the covering 26 to the product 28 in the covering 26. In the example of Fig. 2, the fluid flows via the first sheet 30 into the pad 6. Then, the fluid flows through the product 28. The beverage is then obtained from the fluid and the product 28. Then, in the example of Fig. 2, via the third sheet 64, the beverage will leave the space in which the product is located.

Thereupon, the beverage flows via the inflow surface 59 into the fluid flow area 57. There, the beverage will flow, in this example among the plurality of rods 76, to the spout opening 44. Then, the beverage is pressed through the spout opening 44. As a result, the beverage spouts from the spout opening 44 in the form of a jet of the beverage.

In this example, the jet of coffee spouts through the opening 48 into the buffer reservoir 18. In the buffer reservoir 18, froth is formed in the coffee as described in EP 0878158. In this example therefore, the beverage preparation apparatus 1 comprises the frothing means 52 formed, in this example, by the buffer reservoir 18, for forming the fine bubble froth layer on the beverage, under the influence of the jet exiting from the spout opening 44 of the pad 6. After this, the coffee leaves the coffee machine 1 via a further opening 50 for forming the coffee with the fine bubble froth layer in a cup not shown in the Figures.

It is, for instance, also possible, that the fine bubble froth layer is formed in that the jet spouts onto a jet impact element (as described in WO 03/105642) or spouts on a roughened surface (as described in EP 1317200). Thus, the frothing means 52 can comprise, for instance but not exclusively, a liquid surface, a jet impact element or a roughened surface.

It will be clear that if, in the beverage preparation apparatus 1 described, a pad known per se is used that does not comprise a spout opening 44, so that no jet of the beverage leaves the pad, a beverage will be prepared that is substantially free from the fine bubble froth layer.

It is also possible that, as shown in Fig. 2, the frothing means 52 of the beverage preparation apparatus 1 are formed by frothing means 56 of the holder 8 for forming the fine bubble froth layer on the beverage under the influence of the jet exiting from the spout opening 44 of the pad 6. In Fig. 2, the frothing means 56 are designed as a jet impact element. It will be clear that the frothing means 56 can also be designed differently, as described with respect to the frothing means 52 of the beverage preparation apparatus 1. Providing the holder with the frothing means 56 offers the advantage that, with the aid of the assembly of the holder 8 and the pad 6, it is possible to provide the beverage with the fine bubble froth layer in a beverage preparation apparatus.

It will be clear that if in the described holder 8, a pad known per se is used that does not comprise a spout opening 44, so that no jet of the beverage leaves the pad, a beverage will be prepared that is substantially free of the fine bubble froth layer.

Figs. 4a-4c show examples of pads 6 according to the invention.

Fig. 4a shows a second embodiment of a pad 6 according to the invention. The pad has a covering 26 with a first side 23 and a second side 25 which is filled with product 28 to be extracted and/or to be dissolved. The covering 26 is provided with a first sheet 30 and a second sheet 32 each having a circumferential edge 34, 36 and each having interconnected parts 38, 40 adjacent these circumferential edges 34, 36, which parts 38, 40, in this embodiment, have an angular sealing seam 42.

In this example, the first sheet 30 is formed completely from a filtering material, which filtering material is suitable to hold the product 28, for instance the ground coffee beans, in the pad 6 while the filtering material is transmissive to the fluid. Such a filtering material is for instance filtering paper. On the first side 23, the covering 26 is designed as a filter that is transmissive to the fluid and the beverage, and at least virtually non-transmissive to the product, i.e. forms a barrier to the product 28 in the condition to be dissolved and/or to be extracted and the residue of the product. It will be clear that it is also possible that only a part of the first sheet 30 is transmissive to the fluid, for instance a centrally located part situated substantially opposite the spout opening 44.

In Fig. 4a, the pad 6 is further provided with the spout opening 44 for spouting the extract and/or the solution. The spout opening 44 is in fluid communication with the space enclosed by the covering 26. The spout opening 44 can be included in the second sheet 32, while the second sheet 32 is designed to be virtually non-transmissive to the fluid, the beverage and the product. The second sheet 32 can also be included on or at the second sheet 32, while the second sheet 32 is designed, aside from the fluid communication, to be virtually non-transmissive to the fluid, the beverage and the product. The second sheet 32 could be manufactured from a plastic, but also from a ceramic material, metal, biodegradable plastic or a rubber. The second sheet 32 can also be manufactured from filtering material which, at least aside from the spout opening 44, is provided with a coating rendering the second sheet 32, aside from the spout opening, virtually non-transmissive to the water. In this embodiment, the first and the second sheet 30, 32 are undetachably connected to each other.

In Fig. 4a, the pad 6 is further provided with the distancing means 58. In Fig. 4a, the distancing means 58 are designed as an element 60, for instance a substantially rigid element, which is transmissive to the fluid and the beverage and at least virtually non-transmissive to the product 28, i.e. forms a barrier to the product 28 in a condition to the dissolved and/or distracted and the residue of the product. The element 60 may comprise a piece of open-cell foam, an optionally sintered grain material, and/or a gauze. In this example, the spout opening is, for instance, in fluid communication with the space enclosed by the covering in which the product 28 is located. The fluid communication is formed by the fluid flow area 57 formed, here, by, for instance, the open space of the open-cell foam and/or the optionally sintered grain material. In this example, the spout opening 44 is included in the second sheet 32 and the second sheet is designed to be virtually non-transmissive to the fluid and the beverage. This offers the advantage that the beverage is dispensed at least virtually exclusively via the spout opening 44.

In the example of Fig. 4a, the element 60 comprises meshes, for instance meshes of the open-cell foam or the gauze, or opening of the grain material. One dimension of the meshes is preferably selected such that this dimension is smaller than a dimension of the product, for instance a grain diameter of the product. In this manner, the product is prevented from penetrating into or through the element 60. Thus, the spout opening 44 is prevented from becoming clogged by the product. A surface of the element 60 proximal to the product is preferably larger than a surface (in cross section) of the spout opening. Thus, the beverage can leave the space in which the product is located via a surface to be flowed through that is larger than when the beverage leaves the space in which the product is located via a surface to be flowed through having the size of the spout opening.

If the pad shown in Fig. 4a is included in a holder, in use, the fluid too will be supplied via the first side 23 of the covering to the product 28 in the covering. Then, the fluid flows through the pad 6 and, therefore, through the product 28 from the first side 23 to the spout opening 44 located at the second side 25. After this, the beverage obtained from the fluid and the product 28 is pressed through the spout opening 44. As a result, the beverage spouts from the spout opening 44 in the form of a jet of the beverage for obtaining, with the jet, the fine bubble froth layer on the beverage.

Fig. 4b shows a third embodiment of a pad 6 according to the invention. In this example, the distancing means 58 extend substantially over the entire width of the pad 6 over which the product 28 extends as well. The distancing means can comprise an element 60, for instance a substantially rigid element, as described on the basis of Fig. 4a. The distancing means can also comprise a loose-grained material. In that case, it is of advantage if the pad 6 is provided with the third sheet 64 for holding the loose-grained material and the product 28 separated. The third sheet 64 can be manufactured from, for instance, filtering material. Here, the fluid flow area 57 is formed by, for instance, the open space of the open-cell foam and/or the optionally sintered grain material. In the example of Fig. 4b, the inflow surface 59 extends substantially over at least virtually an entire cross section of the covering 26 over which the product 28 extends, as is also the case in Fig. 2. Thus, the prepared beverage can flow over substantially the entire cross section of the covering 26 over which the product 28 extends from the space in which the product 28 is located to the fluid flow area 57. This offers the advantage that the prepared beverage can leave the space in which the product is located in an efficient manner and can flow to the spout opening 44.

In a special embodiment, the inflow surface 59 extends over the cross section of the covering 26 in a manner such that there is an area that is substantially impervious to the fluid and that extends between the inflow surface and an outer circumference of the cross section over which the product 28 extends, for instance between the inflow surface and the angular sealing seam. In this manner, the fluid can be prevented from flowing down along the product, through the inflow surface 53, to the spout opening 44 without flowing through the product 28.

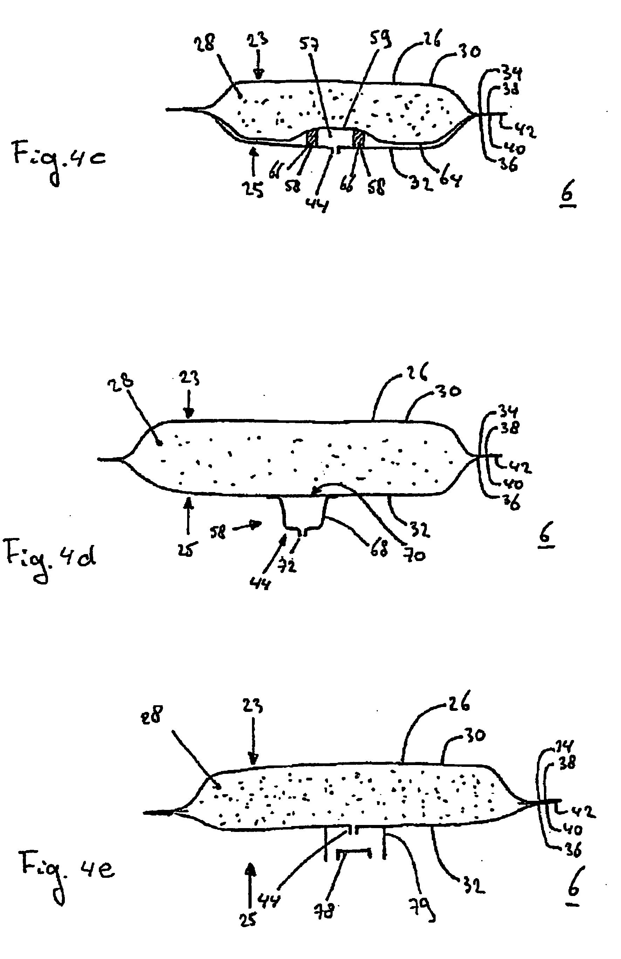

Fig. 4c shows a fourth embodiment of a pad 6 according to the invention. In this example, the distancing means 58 are formed by a rib 66 or a plurality of ribs 66 which, in this example, hold the third sheet 64 at a distance from the spout opening 44. In this manner, the fluid flow area 57 is formed by an open space between the third sheet 64 and the spout opening 44. In this example, the spout opening 44 is included in the second sheet 32 and the second sheet is designed to be at least virtually non-transmissive to the fluid and the beverage. In this example, the second sheet 32 can be designed as, for instance, a substantially rigid tray of, for instance, plastic. In this example, the third sheet 64 may be manufactured from filtering material.

Fig. 4d shows a fifth embodiment of a pad 6 according to the invention. In Fig. 4d, the spout opening 44 comprises a spout element 68 provided with an inflow opening 70 and a dispensing opening 72, while inflow opening 70 is connected, via a fluid communication, with the space enclosed by the covering, and the dispensing opening 72 is designed for generating a jet of the beverage with the dispensing opening 72. In this example, the spout element 68 is attached on an outside of the pad 6, in this example on the second side 25, more specifically on the second sheet 32. In this example, the inflow opening 70 of the spout element has a larger cross section than the dispensing opening 72. Thus, the prepared beverage can flow from the covering 26 via the larger cross section of the inflow opening 70 so that the beverage is discharged from the pad 6 in an efficient manner. In this example, the second sheet 32, aside from the inflow opening 70, is designed to be at least virtually non-transmissive to the fluid. To this end, the second sheet 32 is manufactured from, for instance, filtering material and provided, aside from the inflow opening 70, with a coating which is substantially impervious to the fluid and the beverage.

Fig. 4e shows a sixth embodiment of a pad 6 according to the invention. In Fig. 4e, the pad is further provided with frothing means 78 for forming the fine bubble froth layer on the beverage under the influence of the jet exiting from the spout opening 44 of the pad 6. In Fig. 4e, the frothing means 78 are designed as a roughened surface. It will be clear that the frothing means 78 can also be designed differently, as described on the basis of the frothing means 52 of the beverage preparation apparatus 1.

The pad shown in Fig. 4e can be provided with frothing distancing means 79 for holding the frothing means 78 at a distance from the spout opening 44. The frothing distancing means can be designed as, for instance, at least one rib or at least one rod. The frothing means 78 can also be included in the substantially rigid dish part 74 as shown in Fig. 2.

The pad shown in Fig. 4e can further be provided with distancing means 58 that form the fluid flow area which extends between the spout opening and the product, wherein the fluid flow area comprises the inflow surface, while, in use, the fluid and/or the beverage flows into the fluid flow area via the inflow surface and flows from the fluid flow area via the spout opening. To that end, the distancing means 58 can be designed as shown in, for instance, one of Figs. 2 or 4a-4d.

With the examples of the pad shown in Fig. 2, 4b and 4e, a volume of the space enclosed by the covering in which the product 28 is included is considerably smaller than a total volume occupied by the pad 6. It is therefore possible that such pads comprise a smaller amount of product 28 than pads comprising no distancing means or, at least, smaller ones. The pads with the smaller amount of product can be used for, for instance, preparing beverages which are generally prepared and/or consumed in smaller amounts. A normal portion of coffee or tea preferably contains 90 - 250 ml of fluid, for instance substantially 100 ml in case of French coffee, substantially 122 ml in case of western European coffee, substantially 140 ml in case of Dutch tea, substantially 200 ml in case of American coffee and substantially 240 ml in case of English tea. A smaller portion of coffee or tea preferably comprises 15 - 90 ml, more preferably substantially 60 ml of fluid. It is possible, for instance, that the pad for preparing the small portion of coffee comprises an amount of ground coffee which is between 2 and 5 grams. For preparing the smaller amount of beverage, for instance, a cross section of the spout opening can be selected to be smaller than the cross section of the spout opening for preparing a conventional amount of beverage. The fact is that, if an amount of fluid to be supplied to the pad is regulated on the basis of a duration of a time period over which the fluid is supplied to the pad, the smaller cross section of the spout opening and, hence, the associated greater flow resistance, will lead to a smaller amount of fluid being supplied to the pad over the same period of time. Hence, in a simple manner, the smaller amount of beverage can be prepared.

It will be clear that in this manner, a smaller or larger amount of beverage can be prepared through the supply of fluid, such as water under pressure, to a pad with a covering filled with product to be extracted and/or to be dissolved, while the amount of fluid to be supplied to the pad is regulated on the basis of the duration of the time period over which the fluid is supplied to the pad, while a first and a second pad are provided, each provided with a spout opening, for generating, with the spout opening, a jet of the beverage that leaves the pad for obtaining a fine bubble froth layer on the beverage with the aid of the jet, wherein the flow resistance of the spout opening per pad is varied, while, for preparing the smaller amount of beverage, the cross section of the spout opening of the first pad is selected to be smaller than the cross section of the spout opening of the second pad.

The normal portion of coffee of 90 - 250 ml, more particularly approximately 122 ml, is, for instance, prepared with a beverage preparation apparatus in 20 - 40 seconds, more particularly in approximately 30 seconds. Here, for, for instance, providing the fine bubble froth layer, a spout opening is used with a cross section of 0,5 - 2,5 mm², more particularly approximately 0,7 mm². The smaller portion of coffee of 15 - 90 ml, more particularly approximately 30 ml, can be prepared with the same beverage preparation apparatus in 20 - 40 seconds, more particularly in approximately 30 seconds. Here, for instance for providing the fine bubble froth layer, the spout opening is used with the cross section of 0,04 - 0,2 mm², more particularly approximately 0,1 mm².

However, other cross sections of the spout opening are also possible depending on, for instance, the fluid dispensing unit used.

A coffee pad for preparing the small portion of coffee with the fine bubble froth layer therefore preferably has a spout opening 44 with a cross section of 0,04 - 0,2 mm², more preferably substantially 0,1 mm².

In the examples, the pad is suitable for preparing a (one) portion of beverage. It is also possible that the pad is suitable for preparing, for instance, two cups of beverage. It will be clear that it is possible that then, the pad is provided with a larger spout opening, for instance twice as large a spout opening. However, it is also possible that for preparing two cups of beverage, not the size of the spout opening is adapted, but, for instance, a duration of time during which the fluid is supplied to the pad.

The invention is not limited in any manner to the embodiments described here. It is possible, for instance, to provide an embodiment wherein not the entire first sheet is manufactured from filtering material. Also, an embodiment is possible wherein the covering is formed from a frame and a number of sheets provided in the frame.

In the examples, the pad comprises a spout opening. It is also possible that the pad comprises a plurality of spout openings for generating, with the plurality of spout openings, a jet or a plurality of jets of the beverage that leaves the pad for obtaining the fine bubble froth layer on the beverage with the at least one jet. Here, it is possible that the pad is designed for dispensing the beverage exclusively via the at least one spout opening.

It is further possible that the pad is designed to be refillable, for instance in that, at least a part of, the first and/or the second sheet are designed to be detachable from a rest part of the pad 6, and/or in that the pad is provided with a valve for refilling the pad with a product.

In the examples, the product in the covering of the pad comprises ground coffee. It is also possible that the pad comprises other products to be extracted and/or to be dissolved, such as tea leaves for preparing tea. Here, when filling the pad, for instance automatically, the type of pad that is used to be filled with a specific product to be extracted and/or to be dissolved needs not be taken into account.

All such variants are possible as long as they fall within the framework of the invention as set forth in the claims.

## Claims

1. A pad (6) for preparing an amount of beverage, having a covering (26) filled with product (28) to be extracted and/or to be dissolved, wherein, in use, a fluid such as water is supplied under pressure to the pad, so that the fluid is pressed through the pad (6) for obtaining a beverage which, thereupon, leaves the pad, **characterised in that** the pad is provided with a spout opening (44) for generating, with the spout opening, a jet of the beverage that leaves the pad for obtaining the fine bubble froth layer on the beverage with the aid of the jet.

2. A pad (6) according to claim 1, wherein the covering (26) is provided with a first side (23) and a second side (25), wherein the product is located between the first side and the second side and wherein, on the second side, the covering is at least virtually non-transmissive to the fluid and the beverage, while, at the second side of the covering, the pad is provided with the spout opening (44).

3. A pad (6) according to claim 2, wherein, on the first side (23), the covering (26) is at least partly designed as a filter that is transmissive to the fluid and the beverage and is at least virtually non-transmissive to the product.

4. A pad (6) according to any one of the preceding claims, wherein the spout opening (44) is transmissive to the fluid and the beverage and is at least virtually non-transmissive to the product.

5. A pad (6) according to any one of claims 2-4, wherein, on the first side (23), the covering (26) is formed by a first sheet (30) and, on the second side (25), by a second sheet (32), with the spout opening provided in, on or at the second sheet.

6. A pad (6) according to any one of the preceding claims, wherein the pad comprises a fluid communication between the spout opening (44) and a space enclosed by the covering (26).

7. A pad (6) according to any one of the preceding claims, wherein the spout opening (44) comprises a spout element (68) that is provided with an inflow opening (70) and a dispensing opening (72), wherein the inflow opening is connected via a fluid communication with the space enclosed by the covering, and the dispersing opening is designed for generating a jet of the beverage with the dispensing opening.

8. A pad (6) according to any one of the preceding claims, wherein the pad comprises distancing means (58) which form a fluid flow area (57) that extends between the spout opening (44) and the product (28), wherein the fluid flow area comprises an inflow surface (59), while, in use, the fluid and/or the beverage flows into the fluid flow area via the inflow surface and flows from the fluid flow area via the spout opening.

9. A pad (6) according to claim 8, wherein the inflow surface (59) has a surface which is larger than a surface of the spout opening (44).

10. A pad (6) according to claim 8 or 9, wherein the inflow surface (59) extends substantially over at least virtually an entire cross section of the covering (26) over which the product extends.

11. A pad (6) according to any one of claims 8 - 10, wherein the distancing means (58) comprise an open-cell foam, an optionally sintered grain material, a gauze, at least one rib and/or at least one rod.

12. A pad (6) according to any one of claims 8 - 11, wherein the distancing means (58) comprise a third sheet (64).

13. A pad (6) according to claims 8 and 12, wherein the distancing means (58) are designed for holding the spout opening (44) at a distance from the third sheet (64).

14. A pad (6) according to any one of claims 8 - 13, wherein the distancing means (58) comprise a substantially rigid element.

15. A pad (6) according to any one of the preceding claims, wherein the pad is provided with frothing means (78) for forming the fine bubble froth layer on the beverage under the influence of the jet exiting from the spout opening.

16. A pad (6) according to any one of the preceding claims, wherein a flow resistance of the spout opening can be varied per pad.

17. A pad (6) according to any one of the preceding claims, wherein the flow resistance of each pad is geared to the product to be extracted and/or to be dissolved and/or to the beverage to be prepared with the aid of that pad.

18. A pad (6) according to any one of the preceding claims, wherein the covering (26) of the pad comprises between 2 and 5 grams of ground coffee.

19. A pad (6) according to any one of the preceding claims, wherein the pad is designed for preparing one or two portions of the beverage.

20. An assembly of a first and second pad according to any one of the preceding claims for preparing a smaller or a larger, such as a normal, amount of beverage, wherein, for preparing a smaller amount of beverage, a cross section of the spout opening of the first pad is selected to be smaller than a cross section f a spout opening of the second pad.

21. An assembly (6) according to claim 20, wherein the cross section of the spout opening (44) of the first pad is 0,04 - 0,2 mm², preferably approximately 0,1 mm², and wherein the cross section of the spout opening (44) of the second pad is 0,5 - 2,5 mm², preferably approximately 0,7 mm².

22. A method for preparing a smaller or a larger amount of beverage, comprising
supplying a fluid such as water under pressure to a pad (6) with a covering (26) filled with product (28) to be extracted and/or to be dissolved, wherein an amount of fluid to be supplied to the pad is regulated on the basis of a duration of a time period over which the fluid is supplied to the pad
wherein the method comprises providing a first and a second pad, each provided with a spout opening (44), for generating, with the spout opening, a jet of the beverage that leaves the pad for obtaining a fine bubble froth layer on the beverage with the aid of the jet,
wherein a flow resistance of the spout opening is varied per pad,
wherein, for preparing the smaller amount of beverage, a cross section of the spout opening of the first pad is selected to be smaller than a cross section of a spout opening of the second pad.

23. A method according to claim 22, further comprising gearing the flow resistance to the product (28) to be extracted an/or be dissolved and/or to the beverage to be prepared with the aid of the pad.

24. A method according to claim 22 or 23, comprising supplying, with the aid of one and the same beverage preparation apparatus (1), the fluid to the first or the second pad (6).

25. A method according to any one of claims 22 - 24, further comprising supplying the jet exiting from the spout opening (44) to frothing means (52, 78) for obtaining the fine bubble froth layer.

26. A method according to claim 25, wherein the frothing means (52, 78) comprise a jet impact element or a roughened surface.

27. A method according to any one of claims 22 - 26, wherein the larger amount of beverage involves 90 - 250 ml and the smaller amount of beverage involves 15 - 90 ml.

28. A method according to claim 27, wherein the first pad for preparing the smaller amount of beverage contains 2 - 5 grams of ground coffee.

29. A method according to any one of claims 22 - 28, wherein the duration of the time period over which the fluid is supplied to the pad is 20 - 40 seconds, preferably approximately 30 seconds.

30. A method according to claim 29, wherein the cross section of the spout opening (44) of the first pad is 0,04 - 0,2 mm², preferably approximately 0,1 mm², and wherein the cross section of the spout opening of the second pad is 0,5-2,5 mm², preferably approximately 0,7 mm².

31. An assembly (54) provided with a pad (6) according to any one of claims 1-19 and a holder (8) for holding the pad.

32. An assembly (54) according to claim 31, wherein the holder (8) is provided with a bottom with at least one opening (48) wherein, in use, the covering rests on the bottom, wherein the spout opening is located above or in the opening so that the jet leaves the holder via the opening of the holder.

33. An assembly (54) according to claim 31 or 32, wherein the holder (8) is provided with frothing means for forming the fine bubble froth layer on the beverage under the influence of the jet exiting from the spout opening of the pad.

34. A beverage preparation apparatus (1) for preparing a beverage by means of extraction and/or dissolution, wherein the beverage preparation apparatus is provided with an assembly (54) according to any one of claims 31 - 33, and fluid supply means for supplying the fluid under pressure to the pad.

35. A beverage preparation apparatus (1) according to claim 34, wherein the apparatus is further provided with frothing means (52) for forming the fine bubble froth layer on the beverage under the influence of the jet exiting from the spout opening of the pad.

36. Use of an assembly according to claim 21, a pad according to any one of claims 1-19, an assembly according to any one of claims 31- 33, and/or a beverage preparation apparatus according to claim 34 or 35 for preparing a beverage.

## Patentansprüche

1. Pad (6) zur Zubereitung einer Quantität eines Getränks, mit einer Abdeckung (26), die mit zu extrahierendem und/oder aufzulösendem Produkt (28) gefüllt ist, wobei bei Benutzung dem Pad ein Fluid wie z.B. Wasser unter Druck derart zugeführt wird, dass das Fluid durch das Pad (6) hindurchgedrückt wird, um ein Getränk zu erzeugen, das daraufhin das Pad verlässt, **dadurch gekennzeichnet, dass** das Pad mit einer Tüllenöffnung (44) versehen ist, um mittels der Tüllenöffnung einen Strahl des Getränks zu erzeugen, der das Pad verlässt, so dass mit Hilfe des Strahls eine feinporige Schaumschicht auf dem Getränk erzeugt wird.

2. Pad (6) nach Anspruch 1, bei dem die Abdeckung (26) eine erste Seite (23) und eine zweite Seite (25) aufweist, wobei das Produkt zwischen der ersten Seite und der zweiten Seite angeordnet ist und wobei auf der zweiten Seite die Abdeckung mindestens im Wesentlichen undurchlässig für das Fluid und das Getränk ist, während auf der zweiten Seite der Abdeckung das Pad mit der Tüllenöffnung (44) versehen ist.

3. Pad (6) nach Anspruch 2, bei dem auf der ersten Seite (23) die Abdeckung (26) mindestens teilweise als Filter ausgebildet ist, der für das Fluid und das Getränk durchlässig ist und für das Produkt im Wesentlichen undurchlässig ist.

4. Pad (6) nach einem der vorhergehenden Ansprüche, bei dem die Tüllenöffnung (44) für das Fluid und das Getränk durchlässig ist und für das Produkt im Wesentlichen undurchlässig ist.

5. Pad (6) nach einem der Ansprüche 2 - 4, bei dem die Abdeckung (26) auf der ersten Seite (23) von einer ersten Bahn (30) und auf der zweiten Seite (25) von einer zweiten Bahn (32) gebildet ist, wobei die Tüllenöffnung in, auf oder an der zweiten Bahn vorgesehen ist.

6. Pad (6) nach einem der vorhergehenden Ansprüche, bei dem das Pad eine Fluidverbindung zwischen der Tüllenöffnung (44) und einem von der Abdeckung (26) umschlossenen Raum aufweist.

7. Pad (6) nach einem der vorhergehenden Ansprüche, bei dem die Tüllenöffnung (44) ein Tüllenelement (68) aufweist, das mit einer Einströmöffnung (70) und einer Ausgabeöffnung (72) versehen ist, wobei die Einströmöffnung über eine Fluidverbindung mit dem von der Abdeckung umschlossenen Raum verbunden ist und die Ausgabeöffnung derart ausgebildet ist, dass mittels der Ausgabeöffnung ein Strahl des Getränks erzeugt werden kann.

8. Pad (6) nach einem der vorhergehenden Ansprüche, wobei das Pad Abstandhaltervorrichtungen (58) aufweist, die einen Fluidströmungsbereich (57) bilden, der zwischen der Tüllenöffnung (44) und dem Produkt (28) verläuft, wobei der Fluidströmungsbereich eine Einströmfläche (59) aufweist, und wobei bei Verwendung das Fluid und/oder das Getränk über die Einströmfläche in den Fluidströmungsbereich strömt und über die Tüllenöffnung aus dem Fluidströmungsbereich heraus strömt.

9. Pad (6) nach Anspruch 8, bei dem die Einströmfläche (59) eine Fläche aufweist, die größer ist als eine Fläche der Tüllenöffnung (44).

10. Pad (6) nach Anspruch 8 oder 9, bei dem die Einströmfläche (59) im Wesentlichen mindestens über den gesamten Querschnitt der Abdeckung (26) verläuft, über den sich das Produkt erstreckt.

11. Pad (6) nach einem der Ansprüche 8 - 10, bei dem die Abstandhaltervorrichtungen (58) einen offenporigen Schaumstoff, ein optional gesintertes Körnermaterial, Gaze, mindestens eine Rippe und/oder mindestens einen Stab aufweisen.

12. Pad (6) nach einem der Ansprüche 8 - 11, bei dem die Abstandhaltervorrichtungen (58) eine dritte Bahn (64) aufweisen.

13. Pad (6) nach Anspruch 8 und 12, bei dem die Abstandhaltervorrichtungen (58) derart ausgebildet sind, dass sie die Tüllenöffnung (44) in einem Abstand von der dritten Bahn (64) halten.

14. Pad (6) nach einem der Ansprüche 8 - 13, bei dem die Abstandhaltervorrichtungen (58) ein im Wesentlichen starres Element aufweisen.

15. Pad (6) nach einem der vorhergehenden Ansprüche, wobei das Pad mit Schaumerzeugungsvorrichtungen (78) versehen ist, um unter dem Einfluss des aus der Tüllenöffnung austretenden Strahls die feinporige Schaumschicht auf dem Getränk zu bilden.

16. Pad (6) nach einem der vorhergehenden Ansprüche, bei dem der Strömungswiderstand der Tüllenöffnung pro Pad variiert werden kann.

17. Pad (6) nach einem der vorhergehenden Ansprüche, bei dem der Strömungswiderstand jedes Pads an das zu extrahierende und/oder aufzulösende Produkt und/oder an das mit Hilfe des Pads zuzubereitende Getränk angepasst ist.

18. Pad (6) nach einem der vorhergehenden Ansprüche, bei dem die Abdeckung (26) des Pads 2 bis 5 Gramm gemahlenen Kaffees aufweist.

19. Pad (6) nach einem der vorhergehenden Ansprüche, wobei das Pad zur Zubereitung einer oder zwei Portionen des Getränks ausgelegt ist.

20. Anordnung aus einem ersten und einem zweiten Pad nach einem der vorhergehenden Ansprüche zum Zubereiten einer kleineren oder größeren, wie z.B. einer normalen, Quantität eines Getränks, wobei zum Zubereiten einer kleineren Quantität des Getränks ein Querschnitt der Tüllenöffnung des ersten Pads dahingehend gewählt wird, dass er kleiner ist als ein Querschnitt der Tüllenöffnung des zweiten Pads.

21. Anordnung nach Anspruch 20, bei der der Querschnitt der Tüllenöffnung (44) des ersten Pads 0,04 - 0,2 mm², vorzugsweise ungefähr 0,1 mm² beträgt, und bei der der Querschnitt der Tüllenöffnung (44) des zweiten Pads 0,5 - 2,5 mm², vorzugsweise ungefähr 0,7 mm² beträgt.

22. Verfahren zum Zubereiten einer kleineren oder einer größeren Quantität eines Getränks, umfassend
druckbeaufschlagtes Zuführen eines Fluids wie z.B. Wasser zu einem Pad (6), das eine Abdeckung (16) aufweist, die mit zu extrahierendem und/oder aufzulösendem Produkt (28) gefüllt ist, wobei eine dem Pad zuzuführende Quantität an Fluid auf der Basis der Dauer einer Zeitperiode geregelt wird, während derer das Fluid dem Pad zugeführt wird,
wobei das Verfahren das Bereitstellen eines ersten und eines zweiten Pads umfasst, von denen jedes mit einer Tüllenöffnung (44) versehen ist, um mittels der Tüllenöffnung einen Strahl des Getränks zu erzeugen, der das Pad verlässt, so dass mit Hilfe des Strahls eine feinporige Schaumschicht auf dem Getränk erzeugt wird,
wobei der Strömungswiderstand der Tüllenöffnung pro Pad variiert wird,
wobei zum Zubereiten der kleineren Quantität des Getränks ein Querschnitt der Tüllenöffnung des ersten Pads dahingehend gewählt wird, dass er kleiner ist als ein Querschnitt der Tüllenöffnung des zweiten Pads.

23. Verfahren nach Anspruch 22, ferner mit dem Anpassen des Strömungswiderstands an das zu extrahierende und/oder aufzulösende Produkt (28) und/oder an das mit Hilfe des Pads zuzubereitende Getränk.

24. Verfahren nach Anspruch 22 oder 23, ferner mit dem mittels ein und derselben Getränkezubereitungsvorrichtung (1) erfolgenden Zuführen des Fluids zu dem ersten oder dem zweiten Pad (6).

25. Verfahren nach einem der Ansprüche 22 - 24, ferner mit dem Zuführen des aus der Tüllenöffnung (44) austretenden Strahls an Schaumerzeugungsvorrichtungen (52,78) zum Erzeugen der feinporigen Schaumschicht.

26. Verfahren nach Anspruch 25, bei dem die Schaumerzeugungsvorrichtungen (52,78) ein Strahlaufprallelement oder eine gerauhte Fläche aufweisen.

27. Verfahren nach einem der Ansprüche 22 - 26, bei dem die größere Quantität des Getränks 90 - 250 ml umfasst und die kleinere Quantität des Getränks 15 - 90 ml umfasst.

28. Verfahren nach Anspruch 27, bei dem das erste Pad zum Zubereiten der kleineren Quantität des Getränks 2 - 5 Gramm gemahlenen Kaffees enthält.

29. Verfahren nach einem der Ansprüche 22 - 28, bei dem die Dauer der Zeitperiode, während derer das Fluid dem Pad zugeführt wird, 20 - 40 Sekunden und vorzugsweise ungefähr 30 Sekunden beträgt.

30. Verfahren nach Anspruch 29, bei dem der Querschnitt der Tüllenöffnung (44) des ersten Pads 0,04 - 0,2 mm², vorzugsweise ungefähr 0,1 mm² beträgt, und bei dem der Querschnitt der Tüllenöffnung des zweiten Pads 0,5 - 2,5 mm², vorzugsweise ungefähr 0,7 mm² beträgt.

31. Anordnung (54) mit einem Pad (6) nach einem der Ansprüche 1 - 19 und einem Halter (8) zum Halten des Pads.

32. Anordnung (54) nach Anspruch 31, bei der der Halter (8) einen Boden mit mindestens einer Öffnung (48) aufweist, wobei bei Benutzung die Abdeckung auf dem Boden ruht, wobei die Tüllenöffnung über oder in der Öffnung angeordnet ist, so dass der Strahl den Halter durch die Öffnung des Halters verlässt.

33. Anordnung (54) nach Anspruch 31 oder 32, bei der der Halter (8) mit Schaumerzeugungsvorrichtungen versehen ist, um unter dem Einfluss des aus der Tüllenöffnung des Pads austretenden Strahls die feinporige Schaumschicht auf dem Getränk zu bilden.

34. Getränkezubereitungsvorrichtung (1) zum Zubereiten eines Getränks mittels Extraktion und/oder Auflösung, wobei die Getränkezubereitungsvorrichtung mit einer Anordnung (54) nach einem der Ansprüche 31 - 33 und mit einer Fluidzuführvorrichtung zur druckbeaufschlagten Zuführung des Fluids zu dem Pad versehen ist.

35. Getränkezubereitungsvorrichtung (1) nach Anspruch 34, wobei die Vorrichtung ferner mit Schaumerzeugungsvorrichtungen (52) versehen ist, um unter dem Einfluss des aus der Tüllenöffnung des Pads austretenden Strahls die feinporige Schaumschicht auf dem Getränk zu bilden.

36. Verwendung einer Vorrichtung nach Anspruch 21, einem Pad nach einem der Ansprüche 1 - 19, einer Anordnung nach einem der Ansprüche 31 - 33 und/oder einer Getränkezubereitungsvorrichtung nach Anspruch 34 oder 35 zur Zubereitung eines Getränks.

## Revendications

1. Capsule (6) pour la préparation d'une quantité de boisson, comprenant un revêtement (26) rempli d'un produit (28) devant subir une extraction et/ou une dissolution, dans lequel, en utilisation, un fluide, tel que de l'eau, est fourni sous pression à la capsule, de manière que le fluide soit pressé à travers la capsule (6) pour obtenir une boisson qui, à la suite de cela, quitte la capsule, **caractérisé en ce que** la capsule et munie d'une ouverture de coulée (44) pour générer, avec l'ouverture de coulée, un jet de boisson qui quitte la capsule pour obtenir la fine couche d'écume à bulles sur la boisson, à l'aide du jet.

2. Capsule (6) selon la revendication 1, dans laquelle le revêtement (26) est muni d'une première face (23) et d'une deuxième face (25), dans laquelle le produit est situé entre la première face et la deuxième face et dans laquelle, sur la deuxième face, le revêtement est au moins virtuellement imperméable envers le fluide et la boisson, tandis que, sur la deuxième face du revêtement, la capsule est munie de l'ouverture de coulée (44).

3. Capsule (6) selon la revendication 2, dans laquelle, sur la première face (23), le revêtement (26) est au moins partiellement conçu sous forme de filtre, perméable envers le fluide et la boisson et est au moins virtuellement imperméable au produit.

4. Capsule (6) selon l'une quelconque des revendications précédentes, dans laquelle l'ouverture de coulée (44) est perméable au fluide et à la boisson et est au moins virtuellement imperméable au produit.

5. Capsule (6) selon l'une quelconque des revendications 2 à 4, dans laquelle, sur la première face (23), le revêtement (26) est formé d'une première feuille (30) et, sur la deuxième face (25), par une deuxième feuille (32), l'ouverture de coulée étant prévue dans, sur, ou à la deuxième feuille.

6. Capsule (6) selon l'une quelconque des revendications précédentes, dans laquelle la capsule comprend une communication fluidique entre l'ouverture de coulée (44) et un espace enclos par le revêtement (26).

7. Capsule (6) selon l'une quelconque des revendications précédentes, dans laquelle l'ouverture de coulée (44) comprend un élément de coulée (68) muni d'une ouverture d'entrée d'écoulement (70) et d'une ouverture de distribution (72), dans laquelle l'ouverture d'entrée d'écoulement est connectée, via une communication fluidique, à l'espace enclos par le revêtement, et l'ouverture de distribution est conçue pour générer un jet de boisson avec l'ouverture de distribution.

8. Capsule (6) selon l'une quelconque des revendications précédentes, dans laquelle la capsule comprend des moyens d'espacement (58) formant une zone d'écoulement de fluide (57) s'étendant entre l'ouverture de coulée (44) et le produit (28), dans laquelle la zone d'écoulement de fluide comprend une surface d'entrée d'écoulement (59), tandis que, en utilisation, le fluide et/ou la boisson s'écoule(nt) dans la zone d'écoulement de fluide, via la surface d'entrée d'écoulement, et s'écoule(nt) à partir de la zone d'écoulement de fluide, via l'ouverture de coulée.

9. Capsule (6) selon la revendication 8, dans laquelle la surface d'entrée d'écoulement (59) présente une aire plus grande qu'une aire de l'ouverture de coulée (44).

10. Capsule (6) selon la revendication 8 ou 9, dans laquelle la surface d'entrée d'écoulement (59) s'étend sensiblement sur au moins virtuellement une section transversale entière du revêtement (26) sur lequel le produit s'étend.

11. Capsule (6) selon l'une quelconque des revendications 8 à 10, dans laquelle les moyens d'espacement (58) comprennent une mousse à pores ouverts, un matériau granuleux, optionnellement fritté, une gaze, au moins une nervure et/ou au moins une tige.

12. Capsule (6) selon l'une quelconque des revendications 8 à 11, dans laquelle les moyens d'espacement (58) comprennent une troisième feuille (64).

13. Capsule (6) selon les revendications 8 et 12, dans laquelle les moyens d'espacement (58) sont conçus pour maintenir l'ouverture de coulée (44) à une certaine distance de la troisième feuille (64).

14. Capsule (6) selon l'une quelconque des revendications 8 à 13, dans laquelle les moyens d'espacement (58) comprennent un élément sensiblement rigide.

15. Capsule (6) selon l'une quelconque des revendications précédentes, dans laquelle la capsule est munie de moyens moussants (78), pour former la fine couche d'écume à bulles sur la boisson, sous l'influence du jet sortant de l'ouverture de coulée.

16. Capsule (6) selon l'une quelconque des revendications précédentes, dans laquelle une résistance à l'écoulement de l'ouverture de coulée peut être modifiée pour chaque capsule.

17. Capsule (6) selon l'une quelconque des revendications précédentes, dans laquelle la résistance à l'écoulement de chaque capsule est adaptée au produit à extraire et/ou à dissoudre et/ou à la boisson à préparer à l'aide de cette capsule.

18. Capsule (6) selon l'une quelconque des revendications précédentes, dans laquelle le revêtement (26) de la capsule comprend entre 2 et 5 grammes de café moulu.

19. Capsule (6) selon l'une quelconque des revendications précédentes, dans laquelle la capsule est conçue pour préparer une ou deux portions de la boisson.

20. Ensemble composé d'une première et d'une deuxième capsule selon l'une quelconque des revendications précédentes, pour la préparation d'une plus petite ou d'une plus grande quantité, telle qu'une quantité normale, de boisson, dans laquelle, pour préparer une plus petite quantité de boisson, une section transversale de l'ouverture de coulée de la première capsule est sélectionnée pour être plus petite qu'une section transversale d'une ouverture de coulée de la deuxième capsule.

21. Ensemble (6) selon la revendication 20, dans lequel la section transversale de l'ouverture de coulée (44) de la première capsule est dans la fourchette comprise entre 0,04 et 0,2 mm², de préférence est d'à peu près 0,1 mm², et dans laquelle la section transversale de l'ouverture de coulée (44) de la deuxième capsule est dans la fourchette comprise entre 0,5 et 2,5 mm², de préférence est d'à peu près 0,7 mm².

22. Procédé de préparation d'une plus petite ou d'une plus grande quantité de boisson, comprenant :
la fourniture d'un fluide, tel que de l'eau, sous pression à une capsule (6) munie d'un revêtement (26) rempli de produit (28) devant subir une extraction et/ou une dissolution, dans lequel une quantité de fluide à fournir à la capsule est régulée sur la base d'une durée d'une période de temps pendant laquelle le fluide est fourni à la capsule,
dans lequel le procédé comprend la fourniture d'une première et d'une deuxième capsule, chacune munie d'une ouverture de coulée (44), pour générer, avec l'ouverture de coulée, un jet de boisson quittant la capsule pour obtenir une fine couche d'écume à bulles sur la boisson, à l'aide du jet,
dans lequel une résistance à l'écoulement de l'ouverture de coulée est modifiée pour chaque capsule,
dans lequel, pour la préparation d'une plus petite quantité de boisson, une section transversale de l'ouverture de coulée de la première capsule est sélectionnée pour être plus petite qu'une section transversale d'une ouverture de coulée de la deuxième capsule.

23. Procédé selon la revendication 22, comprenant en outre l'adaptation de la résistance à l'écoulement opposée au produit (28) devant être extrait et/ou dissout et/ou opposée à la boisson à préparer à l'aide de la capsule.

24. Procédé selon la revendication 22 ou 23, comprenant la fourniture, à l'aide d'un seul et même appareil de préparation de boisson (1), du fluide à la première ou à la deuxième capsule (6).

25. Procédé selon l'une quelconque des revendications 22 à 24, comprenant en outre la fourniture du jet sortant de l'ouverture de coulée (44) à des moyens moussants (52, 78) pour obtenir la fine couche d'écume à bulles.

26. Procédé selon la revendication 25, dans lequel les moyens moussants (52, 78) comprennent un élément d'impact de jet ou une surface rendue rugueuse.

27. Procédé selon l'une quelconque des revendications 22 à 26, dans lequel la plus grande quantité de boisson est de l'ordre de 90 à 250 ml et la plus petite quantité de boisson est de l'ordre de 15 à 90 ml.

28. Procédé selon la revendication 27, dans lequel la première capsule pour préparer la plus petite quantité de boisson contient de 22 à 5 gramme de café moulu.

29. Procédé selon l'une quelconque des revendications 22 à 28, dans lequel la durée de la période de temps, pendant laquelle la fluide est fourni à la capsule, est dans la fourchette comprise entre 20 et 40 secondes, de préférence est d'à peu près 30 secondes.

30. Procédé selon la revendication 29, dans lequel la section transversale de l'ouverture de coulée (44) de la première capsule présente une aire dans la fourchette comprise entre 0,04 et 0,2 mm², de préférence est d'à peu près 0,1 mm², et dans lequel la section transversale de l'ouverture de coulée de la deuxième capsule présente une aire dans la fourchette comprise entre 0,5 et 2,5 mm², de préférence est d'à peu près 0,7 mm².

31. Ensemble (54) muni d'une capsule (6) selon l'une quelconque des revendications 1 à 19 et d'un support (8) pour maintenir la capsule.

32. Ensemble (54) selon la revendication 31, dans lequel le support (8) est muni d'un fond dans lequel est ménagée au moins une ouverture (48), dans lequel, en utilisation, le revêtement repose sur le fond, dans lequel l'ouverture de coulée est située au-dessus ou dans l'ouverture, de manière que le jet quitte le support via l'ouverture du support.

33. Ensemble (54) selon la revendication 31 ou 32, dans lequel le support (8) est muni de moyens moussants pour former la fine couche d'écume à bulles sur la boisson, sous l'influence du jet sortant de l'ouverture de coulée de la capsule.

34. Appareil de préparation de boissons (1), pour la préparation d'une boisson, par extraction et/ou dissolution, dans lequel l'appareil de préparation de boissons est muni d'un ensemble (54) selon l'une quelconque des revendications 31 à 33, et de moyens d'alimentation pour fournir le fluide sous pression à la capsule.

35. Appareil de préparation de boissons (1) selon la revendication 34, dans lequel l'appareil est en outre muni de moyens moussants (52) pour former la fine couche d'écume à bulles sur la boisson, sous l'influence du jet sortant de l'ouverture de coulée de la capsule.

36. Utilisation d'un ensemble selon la revendication 21, d'une capsule selon l'une quelconque des revendications 1 à 19, d'un ensemble selon l'une quelconque des revendications 31 à 33, et/ou d'un appareil de préparation de boissons selon la revendication 34 ou 35 pour préparer une boisson.
